# EUROPÄISCHE PATENTANMELDUNG

(11) **EP 2 602 947 A1**
(43) Veröffentlichungstag der Anmeldung: **12.06.2013**
(21) Anmeldenummer: 10855691.1
(22) Anmeldetag: 18.10.2010
(51) Int. Cl.: H04H 60/76, A63F 13/00

(54) **VERFAHREN ZUR KONSTRUKTION VON GEOSOZIALEN SPIELEN MITHILFE VON TEILNEHMERENDGERÄTEN, DEM INTERNET UND MOBILER KOMMUNIKATION UNTER BERÜCKSICHTIGUNG EINES KUMULATIVEN GEMEINSAMEN ANSATZES**

(30) Priorität: 03.08.2010 UA 2010009696
(71) Anmelder: Savchuk, Oleg Leonidovich, Cherkassy 18029 (UA)
(72) Erfinder: Savchuk, Oleg Leonidovich, Cherkassy 18029 (UA)
(74) Vertreter: Jeck, Anton
(86) Internationale Anmeldenummer: PCT/UA2010/000076
(87) Internationale Veröffentlichungsnummer: WO 2012/018315

(57) **Zusammenfassung**

Das Verfahren zur Erstellung von sozialen Spielen mittels einer Mobilkommunikation, bei dem die Ergebnisse des gemeinschaftlichen Spielzugs anhand einer Zweiwegkommunikation per SMS-, MMS-, Sprach-, Ton-, USSD-, Internet-Meldungen zusammen mit Angaben über die geographische Lage der Spieler auf einem Server zuerst empfangen, erfasst, ausgewertet und bearbeitet werden. Dann werden die Daten mit Hilfe von Bedienern gezählt, kontrolliert und analysiert. Danach werden diese Daten in Form von einem oder mehreren Ergebnissen eines gemeinschaftlichen Spielzugs auf Terminals der Wettbewerbsteilnehmer ausgegeben. Das erfindungsgemäße Verfahren gibt verschiedenen Sozialgruppen die Möglichkeit, an intellektuellen Wettbewerben ungeachtet der geographischen Lage und der Anzahl der Teilnehmer teilzunehmen.

## Beschreibung

Die Erfindung betrifft ein Verfahren zur Erstellung von geosozialen Spielen mit Hilfe von Teilnehmerterminals, Internet und Mobilkommunikation unter Einbeziehung eines gemeinschaftlichen Addieransatzes nach dem Oberbegriff des Anspruchs.

Die Erfindung ist in elektronischen Netzwerken einsetzbar. Sie kann bei der Erstellung von neuen bzw. zur Erweiterung der Funktionalitäten von bestehenden Netzen angewendet werden, um Information anzulegen, zu suchen und anzuzeigen. Sie ist dafür vorgesehen, verschiedenen sozialen Gruppen eine Möglichkeit zu geben, an intellektuellen Wettbewerben unabhängig von der geographischen Lage, dem Kommunikationsverfahren mit dem Server sowie von der Anzahl der Beteiligten teilzunehmen.

Durch das Patent UA 49124 (vom 26.04.2010, Erfinder O.L. Savchuk) ist ein Verfahren zur Erstellung von sozialen Spielen mit Hilfe von Mobilkommunikation bekannt.

Das bekannte Verfahren hat die Mängel, dass es keine Möglichkeit bietet, die geographische Lage der Spieler zu berücksichtigen und den gemeinschaftlichen addierenden Spielzug durch Referee und Richter unabhängig zählen, kontrollieren und analysieren zu lassen.

Dieses bekannte Verfahren liegt dem vorgeschlagenen Verfahren seinem technischen Wesen nach am nächsten und gilt als Prototyp.

Es ist Aufgabe der Erfindung,
- beliebig vielen Teilnehmern die Möglichkeit zu geben, an einem intellektuellen Wettbewerb gleichzeitig teilzunehmen,
- die Bearbeitungsoptionen für ihre addierten Spielzugergebnisse zu erweitern, wobei ggf. die geographische Lage der Teilnehmer berücksichtigt wird und wobei diese Spielzüge gleichzeitig unabhängig gezählt und kontrolliert werden, um den gemeinschaftlichen addierenden Spielzug zu ermitteln, und wobei ggf. Referee und Richter mit einbezogen werden.

Die gestellte Aufgabe wird durch die Merkmale des Anspruchs gelöst.

Das erfindungsgemäße Verfahren zur Erstellung von sozialen Spielen wird mit Hilfe der Übertragung von Text-, graphischen, Audio-, Videomeldungen bzw. Grafikkodemeldungen ausgeführt. Diese Meldungen werden mittels SMS, MMS, als Sprach-, Ton- und USSD-Meldungen oder über Internet sowie anhand der Teilnehmerterminals übertragen. Anschließend werden die Informationen auf einem Internet-Server abgelegt, um diese dann auf der Internet-Seite anzuzeigen.

Das Verfahren zeichnet sich dadurch aus, dass die mittels Zweiwegkommunikation per SMS-, MMS-, Sprach-, Ton-, USSD bzw. Internet-Meldungen empfangenen Daten zusammen mit Daten über die geographische Lage der Spieler auf einem speziellen Server gesammelt, abgespeichert und ausgewertet werden. Dies erfolgt mit Hilfe von anwendungsspezifischer Software. Bei Bedarf werden die Daten gleichzeitig mit Hilfe von entsprechenden Schnittstellen des Softwarekomplexes verwendet. Diese Meldungen werden unabhängig mit Hilfe von Bedienern gezählt, kontrolliert und ausgewertet. Danach werden die Daten in Form von einem oder mehreren Ergebnissen für einen gemeinschaftlichen Spielzug auf Terminals der Wettbewerbsteilnehmer ausgegeben.

Die genannten Merkmale sind erforderlich und ausreichend, um den genannten technischen Effekt zu erreichen.

Der technische Effekt der Erfindung ist die Erstellung von einem neuen oder die Erweiterung der Funktionalitäten von einem bestehenden elektronischen Netzwerk zur Erweiterung, Suche und Darstellung der Informationen. Dies ist erforderlich, um verschiedenen Sozialgruppen die Möglichkeit zur Verfügung zu stellen, an intellektuellen Wettbewerben ungeachtet der geographischen Lage und der Anzahl der Wettbewerbsteilnehmer teilzunehmen. Gleichzeitig kann der gemeinschaftliche addierende Spielzug unabhängig mit Hilfe von Referees und Richtern gezählt, kontrolliert und ausgewertet werden.

Das Verfahren zur Erstellung von sozialen Spielen mit Hilfe von Mobilkommunikation wird wie folgt ausgeführt:

Der an einer Beteiligung an einem Sozialspiel interessierte Mobilfunknetz- oder Internetteilnehmer hat die Möglichkeit, entweder an einem bereits laufenden Spiel teilzunehmen oder ein neues Spiel aufzubauen. Der Server stellt eine Verwaltung des Sozialspiels sicher. Anhand der entsprechenden Programme wickelt der Server Erfassung, Speicherung und Analyse der von Mobil- und Internet-Terminals der Spieler empfangenen Daten in Form von Spielzügen oder -antworten ab. Der Server liefert die Ergebnisse in Form von einem oder, wenn das vom Spiel her vorgesehen ist, von mehreren gemeinschaftlichen Addierspielzügen und gibt das Zugrecht an eine andere Partei oder Parteien weiter. Darüber hinaus zeigt der Server die Ergebnisse an, indem die Spielsituation (der Spielzustand) geändert wird, z. B. durch eine Verstellung der Figuren auf dem Spielfeld.

Die Daten werden gleichzeitig mit einer automatischen Bearbeitung mittels spezieller Schnittstellen des Softwaresystems mit Hilfe von Bedienern, und zwar z. B. von Referees oder Richtern, gezählt, kontrolliert und analysiert.

Das heißt, dass ein auf diese Weise aufgebautes System ermöglicht, zum Einen neue Netze zu erstellen oder die Funktionalitäten der bestehenden elektronischen Netze zu erweitern, um die Informationen anzulegen, zu suchen und darzustellen. Zum Anderen stellt es verschiedenen Sozialgruppen die Möglichkeit zur Verfügung, an intellektuellen Wettbewerben ungeachtet der geographischen Lage und der Anzahl der Teilnehmer teilzunehmen. Drittens erlaubt dieses System den Bedienern und z. B. Referees oder Richtern, mit Hilfe von entsprechenden Schnittstellen des Softwaresystems die gemeinschaftlichen Addierspielzüge der Spieler sowie die Spielergebnisse gleichzeitig zu zählen, zu kontrollieren und auszuwerten.

## Patentansprüche

1. Verfahren zur Erstellung von geosozialen Spielen mit Hilfe einer Mobilkommunikation, bei dem Text-, graphische, Audio-, Videomeldungen bzw. Programmkode per SMS, MMS, als Sprach-, Ton- und USSD-Meldungen oder vom Mobilfunkgerät eines die Meldung abgebenden Teilnehmers aus übertragen werden, wobei diese Informationen nachher auf einem Internet-Server abgelegt werden, so dass die Möglichkeit ihrer Darstellung auf einer Internet-Seite sichergestellt wird,
**dadurch gekennzeichnet,**
**dass** die mittels Zweiwegkommunikation per SMS-, MMS-, Sprach-, Ton-, USSD bzw. Internet-Meldungen empfangenen Daten zusammen mit Daten über die geographische Lage der Spieler auf einem speziellen Server mit Hilfe von anwendungsspezifischen Programmen gesammelt, abgespeichert und ausgewertet werden,
**dass** diese Daten je nach Bedarf mit Hilfe von entsprechenden Schnittstellen eines Softwaresystems gleichzeitig durch Bediener unabhängig gezählt, kontrolliert und analysiert werden und
**dass** diese Daten danach in Form von einem oder mehreren Ergebnissen eines gemeinschaftlichen Zuges auf die Terminals der Wettbewerbsteilnehmer ausgegeben werden.
